(19) Europäisches Patentamt
European Patent Office
Office européen des brevets

(11) EP 0 719 097 B1

(12) **FASCICULE DE BREVET EUROPEEN**

(45) Date de publication et mention de la délivrance du brevet:
**28.03.2001 Bulletin 2001/13**

(21) Numéro de dépôt: **95923373.5**

(22) Date de dépôt: **12.06.1995**

(51) Int Cl.[7]: **A23L 1/30**, A23J 7/00

(86) Numéro de dépôt international:
**PCT/FR95/00770**

(87) Numéro de publication internationale:
**WO 96/00016 (04.01.1996 Gazette 1996/02)**

# (54) NOUVELLES COMPOSITIONS DIETETIQUES A BASE DE PHOSPHOLIPIDES ET LEUR UTILISATION COMME COMPLEMENT NUTRITIONNEL

DIÄTETISCHE ZUSAMMENSETZUNGEN ENTHALTEND PHOSPHOLIPIDE UND IHRE VERWENDUNG ALS FUTTERZUSATZ

NOVEL DIETETIC PHOSPHOLIPID COMPOSITIONS AND USE THEREOF AS A DIETARY SUPPLEMENT

(84) Etats contractants désignés:
**AT BE CH DE DK ES FR GB GR IE IT LI LU NL PT SE**

(30) Priorité: **27.06.1994 FR 9407868**

(43) Date de publication de la demande:
**03.07.1996 Bulletin 1996/27**

(73) Titulaire: **INSTITUT DE RECHERCHE BIOLOGIQUE**
**F-78870 Bailly (FR)**

(72) Inventeur: **PONROY, Yves**
**F-78000 Versailles (FR)**

(74) Mandataire: **Burtin, Jean-François**
**Cabinet GEFIB,**
**82, rue Baudin**
**92300 Levallois-Perret (FR)**

(56) Documents cités:
**EP-A- 0 327 765**
**EP-A- 0 404 058**
**EP-A- 0 484 266**

- **DATABASE WPI Week 8529 Derwent Publications Ltd., London, GB; AN 85-175488 & JP-A-60 105 471 (NISSHIN FLOUR MILL KK) , 10 Juin 1985**
- **DATABASE WPI Week 8942 Derwent Publications Ltd., London, GB; AN 89-307256 & SE-A-8 705 122 (NURTITIONAL RES IND) , 23 Juin 1989**

Il est rappelé que: Dans un délai de neuf mois à compter de la date de publication de la mention de la délivrance du brevet européen, toute personne peut faire opposition au brevet européen délivré, auprès de l’Office européen des brevets. L’opposition doit être formée par écrit et motivée. Elle n’est réputée formée qu’après paiement de la taxe d’opposition. (Art. 99(1) Convention sur le brevet européen).



Printed by Jouve, 75001 PARIS (FR)

## Description

La présente invention se rapporte au domaine de la diététique et en particulier au domaine des suppléments nutritionnels.

La présente invention a plus particulièrement pour objet de nouvelles compositions diététiques destinées à compenser chez le nourrisson, et l'enfant ou chez le vieillard un déficit nutritionnel en acides gras essentiels des séries n-3 et n-6.

Elle a spécifiquement pour objet des compositions diététiques apportant des acides gras essentiels des séries n-3 et/ou n-6 chez des sujets fragiles, malnutris ou dénutris sous une forme facilement utilisables et directement utiles pour le bien-être du sujet.

On sait en effet que :

- les prématurés et les enfants de faible poids à la naissance ont des besoins particuliers qui ne sont pas satisfaits avec les laits artificiels actuels même s'ils contiennent une quantité satisfaisante d'acide linoléique (18:2 n-6) et $\alpha$-linolénique (18:3 n-3). En effet, l'équipement enzymatique (désaturases et élongases) des prématurés est trop faible pour synthétiser les homologues supérieurs et en particulier, l'acide docosahexaénoïque ou DHA (22:6 n-3), et l'acide arachidonique (20:4 n-6) (M.FOREMAN Am. J. Clin. Nutr. 57(suppl) (1993) 829S).

- un apport de ces deux acides gras apparaît donc primordial pour assurer un développement correct de la vision (P. PEIRANO J. Pediatr. 120 (1992) 168-180), mais aussi des autres fonctions cérébrales chez les prématurés qui ne sont pas nourris au sein. Des essais ont montré que les fonctions photoréceptrices des prématurés n'ont une maturation optimale que si un apport suffisant d'acides gras à longues chaînes polyinsaturés de la série n-3 est réalisé, soit avec du lait maternel, soit avec des huiles de chair de poissons (D.R HOFFMAN Am. J. Clin. Nutr. 57(suppl) (1993) 801-806).

  Il a même été mis en évidence une corrélation entre le taux de DHA dans le plasma du nouveau-né et son degré de prématurité, évalué selon des index de développements psychomoteur et mental (K. BJERVE Am. J. Clin. Nutr. 57(suppl) (1993) 801-806).

Diverses sources de DHA ont été proposées, à commencer par l'huile de chair de poissons mais celle-ci a l'inconvénient de contenir une forte proportion d'acide eicosapentaénoïque ou EPA (20:5 n-3) dont la présence peut être dangereuse chez l'enfant et qui normalement ne se trouve pas dans le lait maternel (K. BJERVE).

Les acides gras essentiels, et en particulier l'acide $\alpha$-linolénique (18:3 n-3), ont un rôle fondamental pour la maturation cérébrale de l'enfant, mais les carences sont fréquentes. Une carence en acides gras essentiels de la série n-3 engendre une diminution de la teneur en DHA au niveau cérébral (22:6 n-3). Après un apport en acide $\alpha$-linolénique, la récupération est extrêmement lente (J.M BOURRE Prostaglandins, Leukotrienes and Essential fatty acids 48 (1993) 5-15), tandis qu'un apport en acides gras supérieurs et en particulier en DHA, favorise une récupération rapide (J.M BOURRE J. Neuroch. 60 (1992) 2018-2027).

De la même façon, lors du vieillissement, les capacités de désaturation et d'élongation des acides gras essentiels sont réduites. On peut donc envisager les effets bénéfiques d'un apport en acides gras polyinsaturés à longue chaîne.

La présente invention consiste à proposer une source d'acides gras de la série n-3 en proportion convenable pour le système nerveux et en particulier riches en DHA (22:6 n-3) et en acide arachidonique (20:4 n-6), sous la forme de phospholipides riches en acides gras de la série n-3.

Ces phospholipides riches en acides gras polyinsaturés à très longues chaînes, sont présents particulièrement dans le jaune des oeufs de poules qui ont été convenablement nourries, en particulier avec des aliments riches en acides gras essentiels des séries n-3 et n-6, à savoir l'acide $\alpha$-linolénique et l'acide linoléique : graines ou huiles de colza, de soja, de lin, de fruits de Ribes.

Les phospolipides de jaune d'oeuf de poules ont la structure chimique suivante :

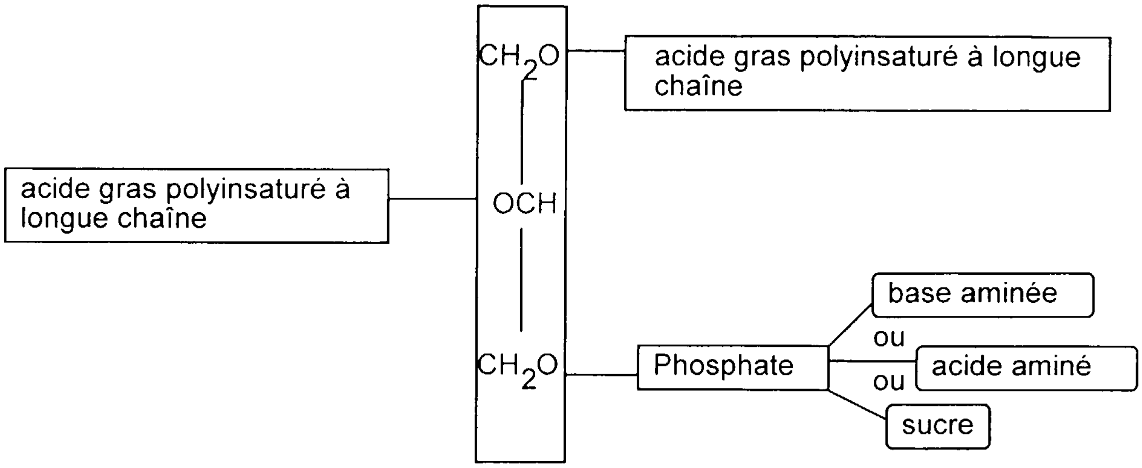


les acides gras sont liés au glycérol, soit par une liaison ester, soit par une liaison éther.

La présente invention a donc pour objet des compositions diététiques pour l'alimentation des sujets fragiles ou dénutris, caractérisées en ce qu'elles contiennent des phospholipides provenant de jaune d'oeuf de poules contenant de 75 à 80% de phosphatidylcholine et de 15 à 20 % de phosphatidyléthanolamine, lesdits phospholipides contenant des acides gras essentiels des séries n-3 et n-6, en association ou en mélange avec des excipients ou des diluants appropriés pour l'usage alimentaire.

Il résulte, en effet, que ces phospholipides provenant de jaune d'oeuf de poules contiennent, en proportion physiologique, les constituants suivants :

- phosphatidylcholine 75 - 80 %
- phosphatidylsérine inférieur à 0,5%
- phosphatidylinositol 0,5 - 1%
- phosphatidyléthanolamine 15 - 20%
- plasmalogène 1 - 2%
- sphingomyéline 2 - 3%

Ces phospholipides ont ceci de particulier et de spécifique qu'ils sont composés d'une quantité notable d'acides gras polyinsaturés à longue chaîne telle :

- acide arachidonique 20:4 n-6 de 2 à 6%
- DHA 22:6 n-3 de 3 à 6%
- le rapport $\frac{n-6}{n-3}$ inférieur à 4
- le rapport $\frac{\text{acide arachidonique}}{\text{DHA}}$ compris entre 0,5 et 1,5
- le rapport $\frac{\text{EPA}}{\text{DHA}}$ inférieur à 0,25
- une publication a déjà montré la différence de composition en acides gras des oeufs de poules provenant d'une ferme traditionnelle en GRECE ou d'un élevage industriel et vendus par la grande distribution aux USA (A.P SIMOPOULOS N. Engl. J. of Med. 1989 (16 Nov. 1989) p.1412).

(en mg d'acides gras par gramme)

| Acides : | | Oeufs fermiers grecs | Oeufs industriels US |
|---|---|---|---|
| * linoléique | 18:2 n-6 | 16 | 26 |
| * α-linolénique | 18:3 n-3 | 6,90 | 0,52 |
| * arachidonique | 20:4 n-6 | 5,4 | 5,02 |
| * EPA | 20:5 n-3 | 1,2 | - |
| | 22:5 n-3 | 2,8 | 0,09 |
| * DHA | 22:6 n-3 | 6,6 | 1,09 |
| n-6 / n-3 | | 1,3 | 19,4 |
| arachidonique / DHA | | 0,82 | 4,61 |
| EPA / DHA | | 0,18 | - |

D'autres travaux ont confirmé la variabilité de la composition en acides gras dans le jaune d'oeuf de la volaille en fonction de son alimentation.

Par exemple, la richesse des oeufs de ferme grecs en DHA et en acides gras de la série n-3 en général est dûe à l'alimentation des poules constituée principalement de pourpier connu pour sa richesse en acides gras n-3 (A. P SIMOPOULOS N. Engl. J. of Med. 315 (1986) (13) 833).

D'autres auteurs ont confirmé que les oeufs de poules en élevage industriel contenaient de très faibles quantités d'acides gras de la série n-3 et seulement des traces de DHA. Les mêmes auteurs ont proposé d'enrichir la ration des animaux en huiles de poisson afin d'enrichir les oeufs en acides gras n-3 pour améliorer leurs propriétés nutritionnelles. Mais, l'huile de poisson augmente la quantité d'EPA (C20:5 n-3) dans les phospholipides de jaune d'oeuf, ce qui n'est pas souhaitable chez l'enfant et surtout le nourrisson.

A titre d'exemple, on peut comparer la teneur en acides gras polyinsaturés à longue chaîne, des oeufs produits par des poules "témoin", recevant une nourriture industrielle classique et des poules recevant la même nourriture, à laquelle on a mélangé 10% d'huile végétale connue pour sa richesse en acide α-linolénique (C18:3 n-3), en particulier le lin ou le colza.

| | acides gras des oeufs de poules en pourcentage du total des acides gras | |
|---|---|---|
| | régime témoin | régime huile végétale riche en n-3 |
| 18:2 n-6 | 8,8 | 10,6 |
| 18:3 n-3 | 0,2 | 5,5 |
| 20:4 n-6 | 1,8 | 2,0 |
| 20:5 n-3 | 0 | 0,2 |
| 22:6 n-3 | 0,8 | 3,9 |
| Somme n-3 | 1,3 | 7,9 |
| Somme n-6 | 10,7 | 11,4 |
| n-6 / n-3 | 8,2 | 1,4 |

L'utilisation nutritionnelle des phospholipides du jaune d'oeuf de poule a déjà été envisagée, en particulier pour lutter contre les troubles de la sénescence (N.HUBER Phospholipides (1990) 241-253), mais, dans ces travaux, il est surtout fait état d'un apport en phosphatidylcholine sans égard à la nature des acides gras dont l'apport provoque une fluidification des membranes et active les lymphocytes et les macrophages.

Dans ces publications, il n'avait pas été envisagé d'enrichir la ration alimentaire des poules avec des acides gras de la série n-3; il n'avait pas non plus été prévu d'exercer une action de régénération et de construction des membranes neuronales.

Cet apport nutritionnel de phospholipides d'oeufs riches en acides gras polyinsaturés à longues chaînes se justifie en particulier dans les cas suivants :

- chez les prématurés et les nourrissons fragiles réputés incapables de réaliser la biosynthèse de ces acides gras spécifiques et indispensables pour le système nerveux central
- chez les enfants ou adolescents qui peuvent avoir des retards ou des difficultés scolaires suite à un retard de maturation cérébrale provoqué par une carence en acides gras essentiels
- chez les personnes âgées pour lutter contre le vieillissement cérébral et favoriser la régénération physiologique des membranes.

Les phospholipides d'oeuf, riches en acides gras polyinsaturés à longues chaînes, peuvent être utilisés dans les laits infantiles ou bien comme complément nutritionnel, mélangés ou non à d'autres éléments nutritifs comme les vitamines, les sels minéraux ou oligo-éléments et présentés sous forme de poudre, de comprimés, de gélules ou de capsules à croquer ou à avaler.

Les phospholipides selon l'invention seront pour cela mélangés ou dilués avec ou dans des adjuvants alimentaires comme des farines, des sucres, des polyols, des saccharides, des matériaux de charge, avec des édulcorants, avec des agents liants, avec des agents aromatisants, avec des agents de sapidité.

Comme adjuvants alimentaires, on pourra citer les farines de céréales, les tourteaux de plantes oléagineuses, les autolysats de protéine, les autolysats de levure de bière, les peptones, la caséine, la pectine, les gélatines ou les hydrolysats de gélatine.

Les sucres qui peuvent être incorporés aux compositions selon l'invention sont des sucres digestibles comme le saccharose, le fructose, le maltose ou le lactose ou bien des sucres non digestibles comme le glucose et l'arabinose.

On peut ajouter également des dextrines, des amidons modifiés, oxydés ou hydrolysés, des dextrines hydrolysées, des maltodextrines ou des polysaccharides modifiés non digestibles.

Comme matériau de charge, on peut citer des celluloses, des celluloses modifiées, des argiles, des sels minéraux, des protéines non digestibles, des hydrolysats de protéine comme par exempe des hydrolysats de caséine ou de farines de poisson deshuilées et désodorisées.

Comme agent liant, on citera au premier chef des celluloses alcoylées, des carboxyméthylcelluloses réticulées ou non, des carboxyméthylamidons ou des polymères de vinyl pyrrolidone pontés.

La teneur en phospholipides d'oeuf varie selon l'objectif alimentaire. Elle sera plus élevée pour les préparations destinées aux enfants et aux adolescents. Pour les nourrissons et les très jeunes enfants, elle sera plus faible, compte tenu du fait que l'apport nutritif, à cet âge de la vie, est fonction du poids corporel.

Pour les personnes âgées, l'apport en phospholipides d'oeuf sera plus important car il y a un déficit nutritionnel à compenser et une baisse de l'activité enzymatique qui tend à entraîner une déperdition des éléments de construction biologique essentiels.

Les compositions diététiques selon l'invention présenteront, avantageusement, une concentration en phospholipides qui s'échelonne entre 0,05 et 5 g par prise unitaire, de préférence entre 0,1 et 0,5 g par prise unitaire.

La présente invention a également pour objet un procédé d'obtention de phospholipides contenus dans les compositions alimentaires décrites précédemment, caractérisé en ce que les phospholipides sont extraits de jaune d'oeuf de poules nourries avec une alimentation contenant des graines ou des huiles de Ribes, de soja, de colza ou de lin. Les oléagineux riches en acides gras polyinsaturés de la série n-3 sont principalement les graines ou les huiles de Ribes, de colza ou de lin.

Ce procédé consiste à séparer les jaunes d'oeuf de poules, à les traiter à l'acétone afin d'obtenir un produit pulvérulent que l'on sèche puis que l'on épuise par un mélange de solvant chloré et d'alcool afin d'obtenir une solution concentrée de phospholipides, à précipiter la solution obtenue par addition d'une cétone, puis à sécher et broyer la fraction contenant les phospholipides et à l'incorporer dans un excipient ou un diluant approprié pour l'usage alimentaire.

## EXEMPLE I

**Poudre à incorporer au lait du biberon**

- Phospholipides de jaune d'oeuf de poule alimentée avec un aliment contenant 10% de graines de lin 49,975 g
- Caséine de lait 100,000 g
- Acétate de tocophérol 0,025 g
- Carbonate de calcium 100,000 g

pour 1000 sachets de poudre contenant 0,05 g de phospholipides de jaune d'oeuf à incorporer au lait du biberon ou à diluer dans un peu d'eau sucrée.

## EXEMPLE II

- Phospholipides de jaune d'oeuf de poule alimentée avec un aliment contenant 5% d'huile de pépin de cassis 2,000 g
- Lécithine de soja 1,000 g
- Acide palmityl-6-L-ascorbique 0,030 g
- Alginate de sodium 1,000 g
- Eau qsp 100 ml

On réalise ainsi une émulsion laiteuse que l'on peut incorporer au lait du biberon ou diluer dans de l'eau minérale.

**EXEMPLE III**

- Phospholipides de jaune d'oeuf de poule alimentée avec un aliment standard contenant 10% d'huile de colza 1,000 g
- Cellulose microcristalline 10,000 g
- Carbonate de magnésium 2,000 g
- Phosphate tricalcique 2,000 g
- Vitamine E 0,010 g
- Méthylcellulose 10,000 g
- Arôme café 1,000 g
- Sorbitol 25,000 g
- Maltodextrine qsp 100 g

On prépare ainsi des granulés renfermant des lécithines à prendre à chaque repas.

**EXEMPLE IV**

- Phospholipides de jaune d'oeuf de poule alimentée avec une nourriture standard supplémentée avec des pépins de cassis broyés 1,000 g
- Lait en poudre écrémé 40,000 g
- Phosphate tricalcique 2,000 g
- Gluconate ferreux 0,400 g
- Carbonate de manganèse 0,100 g
- Lactate de zinc 0,200 g
- Cellulose microcristalline 10,000 g
- Sorbitol 36,300 g
- Poudre de jus de citron 10,000 g

La poudre ainsi obtenue est répartie en sachets de 10 g. Ils sont destinés à être ajoutés à l'alimentation à chaque repas ou à être dilués dans un peu d'eau.

**EXEMPLE V**

- Phospholipides de jaune d'oeuf de poule nourrie avec une alimentation standard supplémentée avec 10% de graines de lin 25,00 g
- Poudre d'acérola 20,00 g
- Caséine 25,00 g
- Carbonate de calcium 10,00 g
- Stéarate de magnésium 2,00 g
- Fructose 17,00 g
- Arôme mandarine 1,00 g

pour faire des comprimés pesant en moyenne 0,300 g.

**Revendications**

1. Compositions diététiques pour l'alimentation des sujets fragiles ou dénutris, caractérisées en ce qu'elles contiennent des phospholipides provenant de jaune d'oeuf de poule contenant de 75 à 80% de phosphatidylcholine et de 15 à 20 % de phosphatidyléthanolamine, lesdits phospholipides contenant des acides gras essentiels des séries n-3 et n-6, en association ou en mélange avec des excipients ou des diluants appropriés pour l'usage alimentaire.

2. Compositions diététiques selon la revendication 1,° caractérisées en ce que la phosphatidylcholine et de la phosphatidyléthanolamine contiennent comme constituant acide gras, de l'acide arachidonique (n-6) et de l'acide docosahexenoïque (n-3).

3. Compositions diététiques selon l'une des revendications 1 ou 2, caractérisées en ce que les phospholipides présentent un rapport (n-6)/(n-3) inférieur à 4.

4. Compositions diététiques selon l'une des revendications 1 à 3, caractérisées en ce que la concentration en phospholipides s'échelonne entre 5 et 0,05 g par prise unitaire.

5. Compositions diététiques selon l'une des revendications 1 à 4, caractérisées en ce que la concentration en phospholipides s'échelonne de préférence entre 0,5 et 0,1 g par prise unitaire.

6. Compositions diététiques selon l'une des revendications 1 à 5, caractérisées en ce que les phospholipides de jaune d'oeuf de poule sont additionnés d'adjuvants alimentaires, d'agents édulcorants, d'agents liants, d'agents aromatisants et/ou d'agents de sapidité.

7. Compositions diététiques selon l'une des revendications 1 à 6, présentées sous forme de comprimés, de gélules, de capsules, de poudre ou d'émulsion.

8. Procédé d'obtention de phospholipides contenus dans les compositions alimentaires selon la revendication 1, caractérisé en ce que les phospholipides sont extraits de jaune d'oeuf de poules nourries avec une alimentation contenant des graines ou des huiles de Ribes, de soja, de colza ou de lin.

9. Procédé d'obtention de phospholipides selon la revendication 8, caractérisé en ce qu'il consiste à séparer les jaunes d'oeuf, à les traiter à l'acétone afin d'obtenir un produit pulvérulent que l'on sèche puis que l'on épuise par un mélange de solvant chloré et d'alcool afin d'obtenir une solution concentrée de phospholipides, à précipiter la solution obtenue par addition d'une cétone, puis à sécher et broyer la fraction contenant les phospholipides et à l'incorporer dans un excipient ou un diluant approprié pour l'usage alimentaire.

**Patentansprüche**

1. Diätetische Komposita für die Ernährung von schwachen oder an Mangelernährung leidenden Personen, dadurch gekennzeichnet, daß diese Phospholipide enthalten, die aus Hühnereigelb mit einem Anteil von 75 bis 80 % Phosphatidylcholin und 15 bis 20 % Phosphatidylethanolamin gewonnen werden, wobei besagte Phospholipide essentielle Omega-3- (n-3) und Omega-6 (n-6)-Fettsäuren enthalten in Verbindung oder vermischt mit für die Ernährung geeigneten Excipienten oder Verdünnungsmitteln.

2. Diätetische Komposita nach Anspruch 1, dadurch gekennzeichnet, daß das Phosphatidylcholin und Phosphatidylethanolamin als Fettsäurenbestandteil Arachidonsäure (n-6) und Docosahexaensäure (n-3) enthalten.

3. Diätetische Komposita nach einem der Ansprüche 1 oder 2, dadurch gekennzeichnet, daß die Phospholipide in einem Verhältnis (n-6)/(n-3) kleiner 4 stehen.

4. Diätetische Komposita nach einem der Ansprüche 1 - 3, dadurch gekennzeichnet, daß die Konzentration der Phospholipide je Einzelaufnahme zwischen 5 und 0,05 g beträgt.

5. Diätetische Komposita nach einem der Ansprüche 1 - 4, dadurch gekennzeichnet, daß die Konzentration der Phospholipide je Einzelaufnahme vorzugsweise zwischen 5 und 0,1 g beträgt.

6. Diätetische Komposita nach einem der Ansprüche 1 - 5, dadurch gekennzeichnet, daß die aus Hühnereigelb gewonnenen Phospholipide mit Nahrungsmittelzusätzen, mit Süßmitteln, mit Bindemitteln, mit Aromamitteln und/oder mit Geschmacksstoffen versetzt werden.

7. Diätetische Komposita nach einem der Ansprüche 1 - 6, mit einer Darreichungsform als Tabletten, Gelkapseln, Kapseln, Pulver oder Emulsion.

**8.** Verfahren zur Gewinnung der in den Nahrungskomposita nach Anspruch 1 enthaltenen Phospholipide, dadurch gekennzeichnet, daß die Phospholipide aus Eigelben von Hühnern gewonnen werden, die mit Futtermitteln gefüttert werden, die Körner oder Johannisbeeren-, Soja-, Raps- oder Leinölen enthalten.

**9.** Verfahren zur Gewinnung von Phospholipiden nach Anspruch 8, dadurch gekennzeichnet, daß dieses darin besteht, die Eigelbe zu trennen, diese mit Azeton zu behandeln, um ein pulvriges Produkt zu erhalten, welches getrocknet wird und dann durch Einsatz einer Mischung aus Lösungsmitteln auf Chlor- und Alkoholbasis aufgebraucht wird, um eine konzentrierte Phospholipidlösung zu erhalten, und die so erhaltene Lösung durch Hinzufügung eines Ketons zu fällen, um dann die die Phospholipide enthaltende Fraktion zu trocknen und zu mahlen und diese in ein Excipient oder ein für die Ernährung geeignetes Verdünnungsmittel zu geben.

**Claims**

**1.** Dietary compositions for feeding of fragile or poorly-fed subjects defined in that they contain phospholipids deriving from egg yolks containing from 75 to 80 % phosphatidyl choline and from 15 to 20 % phosphatidyl ethanolamine, said phospholipids containing essential fatty acids from the series n-3 and n-6 in combination or admixture with excipients or diluents suitable for the use as a food.

**2.** Dietary compositions according to claim 1, wherein phosphatidylcholine and phosphatidyl ethanolamine moreover contain as the fatty acid component, arachidonic acid (n - 6) and docosahexaenoic acid (n - 3).

**3.** Dietary compositions according to one of claims 1 or 2, wherein the phospholipids show a ratio $\frac{n-6}{n-3}$ lower than 4.

**4.** Dietary compositions according to one of the claims 1 to 3, wherein the content in phospholipids ranges from 5 to 0,05 g per unit dosage.

**5.** Dietary compositions according to one of the claims 1 to 4, wherein the content in phospholipids preferably ranges between 0,5 and 0,1 g per unit dosage.

**6.** Dietary compositions according to one of the claims 1 to 5, wherein the phospholipids from egg yolk of hen are added to alimentary adjuvants, sweetening agents, binding agents, flavouring agents and/or validity agents.

**7.** Dietary compositions according to one of the claims 1 to 6, delivered in the form of tablets, soft gelatine capsules, capsules, powders or emulsions.

**8.** Process for producing phospholipids contained in the alimentary compositions according to claim 1, wherein the phospholipids are extracted from egg yolks fed with a feeding containing seeds or oils of Ribes, soja, rape or line.

**9.** A process for producing phospholipids according to claim 8, which consists in separating egg yolks, treating them with acetone to obtain a powdery product which is dried then is extracted with a mixture of chlorinated solvent and alcohol to produce a concentrated solution of phospholipids, precipitating the resulting solution by adding a ketone, then drying and grinding the portion containing the phospholipids and incorporating it into an excipient or a diluent appropriate for the alimentary use.